# EUROPEAN PATENT SPECIFICATION

(11) **EP 4 300 076 B1**
(45) Date of publication and mention of the grant of the patent: **02.07.2025**
(21) Application number: 23176659.3
(22) Date of filing: 01.06.2023
(51) Int. Cl.: G01N 21/03, G01N 21/77, G01N 21/47, G01N 21/82, G01V 8/00

(54) **MODULABLE MULTIPARAMETER PROBE WITH FIBER OPTIC SENSORS**
MODULIERBARE MULTIPARAMETER-SONDE MIT FASEROPTISCHEN SENSOREN
SONDE MULTIPARAMETRES MODULABLE AVEC CAPTEURS A FIBRE OPTIQUE

(30) Priority: 28.06.2022 ES 202230578
(43) Date of publication of application: 03.01.2024
(73) Proprietor: Fibsen Monitorizaciones, S.L., 46010 Valencia Valencia (ES)
(72) Inventor: SANZ LATORRE, Javier, 46010 Valencia (Valencia) (ES)
(74) Representative: Sahuquillo Huerta, Jesús

(56) References cited:
- WO-A1-2020/009642
- JP-A- S62 249 032
- US-A1- 2005 036 140
- US-A1- 2021 404 969
- US-B2- 7 715 005

## Description

### Technical field of the invention

The present invention refers to a single fiber optic cable with a multiparameter probe having the particularity of grouping inside it multiplexed fiber optic sensors in a single hermetic container embedded in a fiber optic cable, so that each sensor is encapsulated independently.

### Prior art

Currently, the most advanced multiparameter measurement systems use electronic or optoelectronic point sensors, where two or more sensors are integrated in the same structure without the possibility of adequate maintenance and without being modular.

Examples are documents WO 2018/224703 A1, US 2004/013,040 A1, WO 2008/149059 A1 and US 6,827,597 B1. For example, WO 2018/224703 A1 describes a multi-parameter probe suitable for monitoring geomicrobiological activity in deep boreholes in subterranean media comprising a plurality of sensors, but neither these sensors are fiber optic sensors, nor are they encapsulated independently of each other, The result is a more complicated and expensive probe to operate, since it requires a structure external to the cable, of larger dimensions and, for each sensor, different components and a different structure must be used, which results in a higher probability of failure and an increase in maintenance time.

Apart from that, the document WO 2020/009642 A1 relates to an online biosensor system and method for combined real-time UV-light monitoring and nanoplasmonic sensing based on LSPR. The biosensor system comprises a sensor module, a light source module, optical fiber module and a detector module. The sensor module comprises at least one sensor chip which is contact with a sample. A first sensor chip of the sensor module comprises a surface and plasmonic nanoparticles. The plasmonic nanoparticles are immobilized on said surface or alternatively on an optional substrate con- figured above said surface. The nanoparticles capture molecules, such as the antibodies, and said molecules have specificity for one or more analytes. The light source module emits a first light in the UV light region as well as a second light in the visible region or in the near-infrared region. The optical fiber module comprises at least one optical fiber which is connected to the sensor module, light source module and the detector module. The optical fiber module passes light from the light source module to the sensor module. Moreover, the optical fiber module also passes reflected or transmitted light from the sensor module directly or indirectly to the detector module. The detector module detects reflected or transmitted UV light and LSPR shift from said sensor module.

Furthermore, the document US 2055/036140 A1 relates a a fiber optic flow cell. The flow cell comprises a substrate having at least one sample channel and at least one optical fiber channel holder. At least one optical fiber is disposed within each optical fiber channel holder. Each optical fiber has at least one grating wherein each grating is in contact with each sample channel, defining a sensing area. At least one sample port is positioned in an operable relationship to at least one sample channel. Alternatively, at least one sample outlet is positioned in an operable relationship to at least one sample channel. The flow cell may be of a modular design providing a flow cell kit that contains pieces that may be assembled to form custom-made flow cells. The flow cell is used for conducting measurement studies on a sample.

### Explanation of the invention

It is an object of the present invention to provide a single fiber optic cable with a multiparameter probe embedded or integrated within the single fiber optic cable, the multiparameter probe comprising at least one fiber optic sensor which is modular and convenient and simple to maintain. It is a further object of the present invention that the sensors are physically encapsulated independently, within a housing accessible from the outside by an operator, but whose input and output signals are multiplexed, in such a way as to permit the continuity of the passage of information through the main fiber optic cable, without the need to externalize the multiparameter probe. Finally, it is another object of the invention that the end user may configure the multiparameter probe of the invention according to his needs, including or removing certain sensors within the encapsulation of the multiparameter probe throughout the useful life thereof.

More specifically, the present invention is directed to a single fiber optic cable with a multiparameter probe embedded or integrated within the single fiber optic cable, as defined in appended independent claim 1. Particular embodiments of the invention are defined in appended dependent claims. The scope of the invention is solely defined and restricted by the appended claims.

The present invention uses fiber optic sensors consisting of sensors that measure physical, biological, or chemical parameters relating the changes in the light pulses traveling through the fiber core to the phenomenon that causes it (known as *backscattered signals*). If we classify fiber optic sensors according to the role of the fiber in the detection process, they can be divided into intrinsic or extrinsic sensors. Extrinsic sensors are those that use elements or structures external to the fiber to create a stimulus that causes fluctuations in the light beam propagating through the fiber core. However, intrinsic sensors are those where the optical fiber itself is the sensitive element and where the measurement process is based on relating the fluctuations in the light beam propagating through the core of the fiber.

Thus, the present invention, defined by the claims, is configured as a modular and compact multiparameter probe that stands out for its great versatility to configure a large number of sensors and to be manipulated by the end user in a safe and simple way. Inside it comprises at least two fiber optic sensors whose output signal is multiplexed. The multiparameter probe is configured as a housing integrated or embedded in a main fiber optic cable, inside which is housed a plurality of fiber optic sensors encapsulated independently of each other and constituting a uniform structure that leads to convenient maintenance and reduced complexity. At the ends of each sensor capsule there may be quick installation connectors so that the sensors can be easily mounted and dismounted.

Throughout the description and the claims, the word "comprises", and variants thereof, are not intended to exclude other technical features, additives, components, or steps. To those skilled in the art, other objects, advantages, and features of the invention will be apparent in part from the invention and in part from the practice of the invention. The following examples and drawings are provided by way of illustration and are not intended to restrict the present invention. The scope of the invention is solely defined and restricted by the appended claims. Furthermore, the invention covers all possible combinations of particular and preferred embodiments indicated herein which fall within the scope defined by the appended claims.

### Brief description of the drawings

The following is a very brief description of a series of drawings which help to better understand the invention, and which relate expressly to an embodiment of said invention, which is illustrated as a non-limiting example thereof.
FIG.1 shows a multiparameter probe in accordance with embodiments of the present invention embedded in a fiber optic cable in a view of the watertight system during normal operation of the invention.
FIG.2 shows a multiparameter probe according to an embodiment of the present invention embedded in a fiber optic cable in an open system view for mounting sensors and performing maintenance tasks.
FIG.3 shows an isolated view of a free-standing capsule containing a fiber optic sensor in accordance with an embodiment of the present invention.
FIG.4 shows two schematics (a and b) of an example combination of optical multiplexing in the probe. **Explanation of a detailed embodiment of the invention**

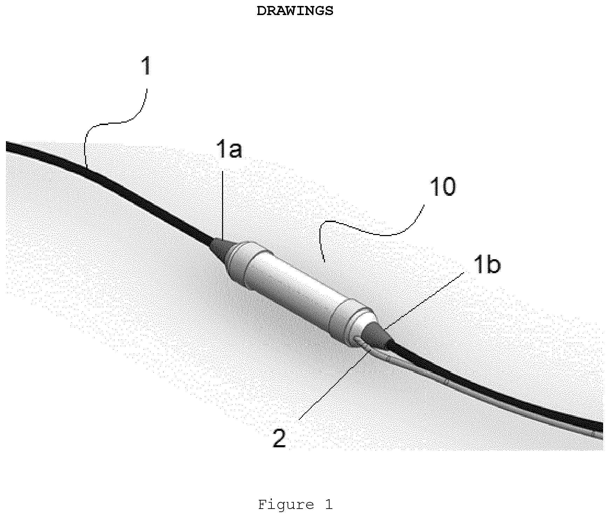

As can be seen in **Figure 1****,** the multiparameter probe 10 is embedded or integrated in a single fiber optic cable 1. The multiparameter probe 10 is configured as a hermetic housing comprising a fiber optic inlet 1a and a fiber optic outlet 1b, as well as a sampling inlet 2, which in this particular case is a tube for supplying a liquid substance from a pipe to pass into the multiparameter probe 10 and thus perform the corresponding measurement.

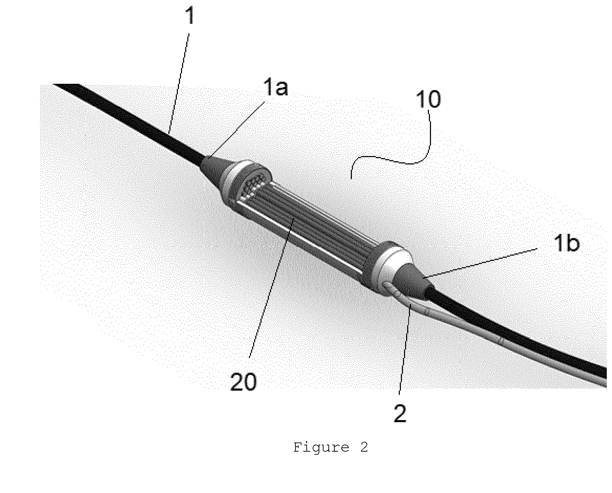

**Figure 2** shows how the housing of the probe 10 is open at the top, since it is a register that allows access to the interior of the probe 10 itself to facilitate maintenance work. Therefore, the probe 10 is configured as a hermetic container that opens by means of a screw or click closure, separating the upper cover.

Inside the probe 10, in figure 2, it is possible to appreciate how is the internal structure of the probe 10 object of the present invention. The probe 10 incorporates a plurality of uniformly structured capsules 20, each of which is independent of the rest and contains a fiber optic sensor. These capsules 20 independent of each other are connected to the body of the probe 10, to the fiber optic input 1a and fiber optic output 1b specifically, by means of quick SC/APC type fiber optic connectors as a non-limiting example.

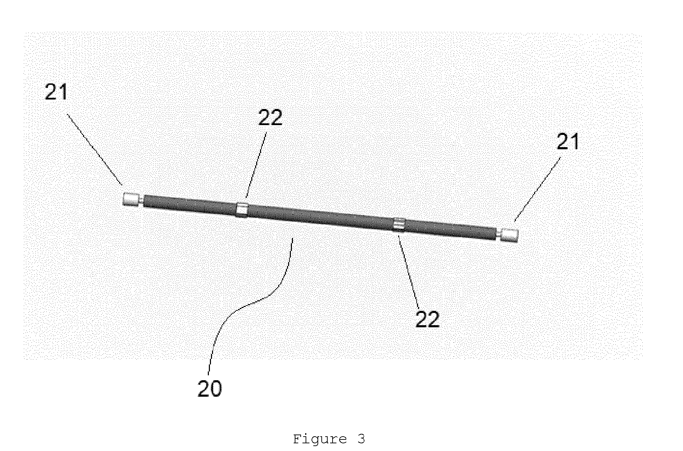

Finally, **Figure 3** shows in detail an independent capsule 20 containing a fiber optic sensor, inside which the measurement process of a physical parameter is carried out, such as, for example, temperature, chlorine, turbidity or any other measurable by means of fiber optic sensors. Each capsule 20 preferably has an elongated and cylindrical shape, closed at its ends by means of fiber optic connectors 21. In addition, it will comprise at least one fixing element 22, which is a part configured to hold and organize the independent capsules 20 within the probe 10.

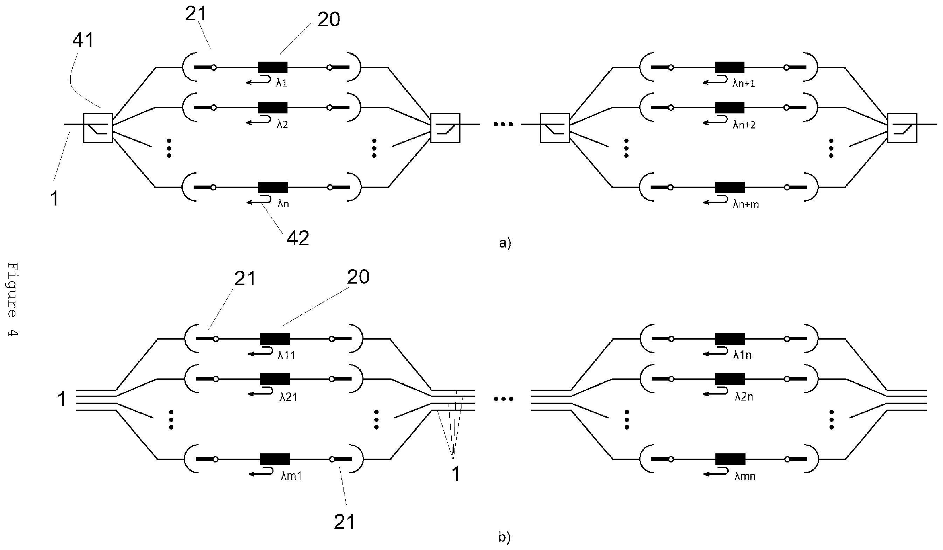

The operation of using a multiparameter probe in accordance with embodiments of the invention is as follows:
First, the sample 2 passes through the interior of the probe 10 between the sample inlet and the sample outlet. In the example shown in the figures, it is a fluid coming from a pipe. This sample 2, therefore, passes between the plurality of capsules 20 independent of each other and containing a fiber optic sensor configured to measure a certain physical parameter of the sample as a function of the change in the reflected light spectrum. The reflected output signals from each of the capsules 20 are joined to the reflected signals from other sensors which are multiplexed together traveling on a single optical fiber, as best shown in **Figure 4****.** These multiplexed output signals are then passed back through an optical circulator, which is located at the beginning of the fiber optic cable and is independent of the probe and diverted to a demultiplexer to separate the signals again. After processing the change from optical to electrical signal and analysis of the digital signal, the corresponding measurement of each physical, chemical, or biological parameter is established, depending on the case.

More specifically, **Figure 4** details a basic architecture where one can see the characteristics of fiber modularity and multiplexing, through connectors 21. **Figure 4(a)** is a parallel multiplexing, where the fiber optic splitter 41 divides the signal traveling in a fiber (1) into N channels (noted asλ₁ ...λ_{N} in Figure 4, each corresponding to a capsule 20), in each channel there is a sensor that detects a wavelength change specific to each sensor. On the other hand, **Figure 4(b)** is a serial multiplexing, which is a sensor *array* (*sensor array*) that each optical fiber (1) corresponds to a channel, and in each channel n sensors are put in series (noted as λ₁ ...λₙ in Figure 4, each corresponding with a capsule 20), these sensors detect a wavelength change peculiar to each signal that is backscattered 42.

Thanks to the multiparameter probe 10 of the invention, defined by the appended claims, and its modular structure with each sensor encapsulated independently, it is possible to obtain a multiparameter probe modulable within a single fiber optic cable, incorporating a plurality of sensors for measuring a plurality of physical, chemical, or biological parameters.

This configuration results in a simpler and more compact system than those known in the state of the art. In addition, and precisely due to its compact structure, it is easier to operate and maintain, reducing maintenance costs and the probability of failure, since if a single sensor fails, it is not necessary to replace the entire probe, but only the affected capsule or capsules.

## Claims

1. A single fiber optic cable (1) with a multiparameter probe (10) embedded or integrated within the single fiber optic cable (1); wherein the multiparameter probe (10) is configured as a hermetic container with an inlet (1a) for the single fiber optic cable (1) and an outlet (1b) for the single fiber optic cable (1),
as well as an inlet for a sample (2), wherein the multiparameter probe (10) comprises a plurality of capsules (20) which are incorporated inside the multiparameter probe (10), each of the capsules (20) being independent from the other capsules (20) and modularly structured;
wherein each capsule (20) of the plurality of capsules (20) consists of a fiber optic sensor configured to measure a physical, chemical or biological parameter of a sample (2) when it is inside the multiparameter probe (10); and wherein r
each fiber optic sensor is physically encapsulated independently within a capsule (20) within the hermetic container and accessible from outside r of the hermetic container
by an operator, but whose input and output signals are multiplexed, in such a way as to permit the continuity of the passage of information through the single fiber optic cable (1), without the need to externalize the multiparameter probe (10).

2. The single fiber optic cable (1) of claim 1 wherein the hermetic container is configured as an airtight container, and which contains a lid or register configured to be opened by means of a screw or click closure.

3. The single fiber optic cable (1) according to claim 1 or 2, further comprising fiber optic quick connectors (21), wherein each independent capsule (20) is connected to the inlet (1a) of the single fiber optic cable (1) and the outlet (1b) of the single fiber optic cable (1) via the fiber optic quick connectors (21).

4. The single fiber optic cable (1) according to any one of the preceding claims, further comprising fiber optic quick connectors (21), wherein each capsule (20) has an elongated, cylindrical shape, closed at its ends by means of the fiber optic quick connectors (21).

5. The single fiber optic cable (1) according to any one of the preceding claims wherein each capsule (20) comprises at least one fastener element (22) configured to hold and structure the capsules (20) independent of each other within the multiparameter probe (10).

## Patentansprüche

1. Ein einzelnes Glasfaserkabel (1) mit einer Multiparametersonde (10), die in das einzelne Glasfaserkabel (1) eingebettet oder integriert ist; wobei die Multiparametersonde (10) als hermetischer Behälter mit einem Einlass (1a) für das einzelne Glasfaserkabel (1) und einem Auslass (1b) für das einzelne Glasfaserkabel (1) konfiguriert ist, sowie einen Einlass für eine Probe (2),
wobei die Multiparametersonde (10) eine Vielzahl von Kapseln (20) umfasst, die in die Multiparametersonde (10) eingebaut sind, wobei jede der Kapseln (20) unabhängig von den anderen Kapseln (20) und modular aufgebaut ist;
wobei jede Kapsel (20) die mehreren Kapseln (20) aus einem faseroptischen Sensor besteht, der so konfiguriert ist, dass er einen physikalischen, chemischen oder biologischen Parameter einer Probe (2) misst, wenn diese sich innerhalb der Multiparametersonde (10) befindet; und
wobei der faseroptische Sensor physisch unabhängig in einer Kapsel (20) innerhalb des hermetischen Behälters gekapselt und von außerhalb des hermetischen Behälters für einen Bediener zugänglich ist, dessen Eingangs- und Ausgangssignale jedoch so multiplexiert sind, dass die Kontinuität des Informationsflusses durch das einzelne faseroptische Kabel (1) gewährleistet ist, ohne dass die Multiparametersonde (10) nach außen geführt werden muss.

2. Das einzelne Glasfaserkabel (1) nach Anspruch 1, wobei der hermetische Behälter luftdicht ausgeführt ist und einen Deckel oder ein Register enthält, der mit einem Schraub- oder Klickverschluss geöffnet werden kann.

3. Das einzelne Glasfaserkabel (1) nach Anspruch 1 oder 2, das zusätzlich Glasfaser-Schnellverbinder (21) umfasst, wobei jede unabhängige Kapsel (20) über die Glasfaser-Schnellverbinder (21) mit dem Eingang (1a) und dem Ausgang (1b) des einzelnen Glasfaserkabels (1) verbunden ist.

4. Das einzelne Glasfaserkabel (1) nach einem der vorhergehenden Ansprüche, wobei jede Kapsel (20) eine längliche, zylindrische Form aufweist und an ihren Enden durch Glasfaser-Schnellverbinder (21) verschlossen ist.

5. Das einzelne Glasfaserkabel (1) nach einem der vorhergehenden Ansprüche, wobei jede Kapsel (20) mindestens ein Befestigungselement (22) aufweist, dass die Kapseln (20) unabhängig voneinander in der Multiparametersonde (10) hält und anordnet.

## Revendications

1. Câble à fibre optique unique (1) avec une sonde multiparamétrique (10) intégrée ou incorporée dans le câble à fibre optique unique (1) ; dans lequel la sonde multiparamétrique (10) est configurée comme un conteneur hermétique avec une entrée (1a) pour le câble à fibre optique unique (1) et une sortie (1b) pour le câble à fibre optique unique (1), ainsi qu'une entrée pour un échantillon (2),
dans lequel la sonde multiparamétrique (10) comprend une pluralité de capsules (20) qui sont incorporées à l'intérieur de la sonde multiparamétrique (10), chacune des capsules (20) étant indépendante des autres capsules (20) et structurée de manière modulaire ;
dans laquelle chaque capsule (20) de la pluralité de capsules (20) est constituée d'un capteur à fibre optique configuré pour mesurer un paramètre physique, chimique ou biologique d'un échantillon (2) lorsqu'il se trouve à l'intérieur de la sonde multiparamétrique (10) ; et
dans lequel le capteur à fibre optique est physiquement encapsulé de manière indépendante dans une capsule (20) à l'intérieur du conteneur hermétique et accessible depuis l'extérieur du conteneur hermétique par un opérateur, mais dont les signaux d'entrée et de sortie sont multiplexés, de manière à permettre la continuité du passage des informations à travers le câble à fibre optique unique (1), sans qu'il soit nécessaire d'externaliser la sonde multiparamétrique (10).

2. Le câble à fibre optique unique (1) selon la revendication 1, dans lequel le conteneur hermétique est configuré comme un conteneur étanche à l'air et qui contient un couvercle ou un registre configuré pour être ouvert au moyen d'une fermeture à vis ou à clic.

3. Le câble à fibre optique unique (1) selon la revendication 1 ou 2, comprenant en outre des connecteurs rapides à fibre optique (21), dans lequel chaque capsule indépendante (20) est connectée à l'entrée (1a) du câble à fibre optique unique (1) et à la sortie (1b) du câble à fibre optique unique (1) via les connecteurs rapides à fibre optique (21).

4. Le câble à fibre optique unique (1) selon l'une quelconque des revendications précédentes, dans lequel chaque capsule (20) a une forme cylindrique allongée, fermée à ses extrémités au moyen de connecteurs rapides à fibre optique (21).

5. Le câble à fibre optique unique (1) selon l'une quelconque des revendications précédentes, dans lequel chaque capsule (20) comprend au moins un élément de fixation (22) configuré pour maintenir et structurer les capsules (20) indépendamment les unes des autres à l'intérieur de la sonde multiparamétrique (10).
